# EUROPÄISCHE PATENTSCHRIFT

(11) **EP 0 857 275 B1**
(45) Veröffentlichungstag und Bekanntmachung des Hinweises auf die Patenterteilung: **23.08.2000**
(21) Anmeldenummer: 96934762.4
(22) Anmeldetag: 19.10.1996
(51) Int. Cl.: F16L 37/084

(54) **ANSCHLUSSSTÜCK FÜR PROFILROHRE, PROFILSTUTZEN, WELLSCHLÄUCHE OD. DGL. STRÄNGE**
CONNECTING PIECE FOR PROFILED PIPES, PROFILED MUFFS, CORRUGATED TUBES OR SIMILAR EXTRUDED ARTICLES
RACCORD POUR TUBES PROFILES, TUBULURES PROFILEES, TUYAUX ONDULES OU PRODUITS EXTRUDES ANALOGUES

(30) Priorität: 28.10.1995 DE 19540279
(43) Veröffentlichungstag der Anmeldung: 12.08.1998
(73) Patentinhaber: INTERFLEX S.A., 08110 Montcada I Reixac (ES)
(72) Erfinder: NEUSTADTL, Paul, A-8042 Graz (AT)
(74) Vertreter: Hiebsch, Gerhard F., Dipl.-Ing.
(86) Internationale Anmeldenummer: EP9604554
(87) Internationale Veröffentlichungsnummer: WO9716671

(56) Entgegenhaltungen:
- DE-A- 4 334 529
- US-A- 4 836 580

## Beschreibung

Die Erfindung betrifft ein Anschlußstück für Profilstutzen, Wellschläuche od.dgl. Profilrohre mit parallelen Außennuten nach dem Oberbegriff des unabhängigen Patentanspruches.

Solche Anschlußstücke mit Wellenschläuchen finden vorwiegend Verwendung in der Elektrotechnik zum Schutz elektrischer Leitungen, in einer speziellen Profilrohr-Ausführung mit Dichtung als Luftrohr in der Pneumatik oder zum Transport flüssiger Medien, beispielsweise Wasser.

Ein Verbindungselement mit einem Tragring in Form einer Schiebemuffe aus einem Anschlagring, einem axialen in Abstand dazu angeordneten Innenring, den Anschlagring und den Innenring verbindenden Stegen sowie sich vom Innenring zum Anschlagring hin erstreckenden Schenkeln, welche Verriegelungskrallen zum Wellrohr hin besitzen, offenbaren beispielhaft die EP 0 465 896 A1 oder die US-A-4836580.

Als Nachteil derartiger Vorrichtungen hat sich bei beweglicher Schiebemuffe die geringe Betriebssicherheit ergeben sowie deren Baugröße. Eine bewegliche Schiebemuffe erlaubt ein wiederholtes Montieren und Loslösen von Profilrohren. Bei bestehenden Vorrichtungen mit beweglicher Schiebemuffe -- ohne Gegendruck -- können bereits Betriebsvibrationen oder ungeschickte Handhabung, zufällige Schlag- und Druckeinwirkung oder einfache Sabotage die Betriebssicherheit in Frage stellen, d.h. ein zufälliges Loslösen des Profils aus der Armatur ist jederzeit möglich. Zudem reduziert der Gebrauch die Rückstellkraft.

Ein gattungsgemäßes Anschlußstück zum Verbinden mit einem flexiblen Wellrohr ist aus der DE 43 34 529 A1 als verhältnismäßig konstruktiv aufwendige Kombination aus einer Verbindungsbüchse mit mehreren fensterartigen Durchbrüchen und einem in der Verbindungsbüchse axial verschieblichen Teil bekannt, das einstückig angeformte, um einen Gelenkbereich schwenkbare Druckfinger aufweist. Jenes verschiebliche Teil ist ein Doppelmantelstück mit Ausnehmungen in einer Ringfläche, die an der Außenseite den Doppelmantel verbindet. Der Innenmantel wird von sechs Druckfingern gebildet, und der Außenmantel dient als Griffstück. In die Ausnehmungen der Ringfläche des Doppelmantels greifen Vorsprünge der Verbindungsbüchse ein, so dass eine Anzeige dafür gegeben ist, ob das flexible Wellrohr von der Verbindungsvorrichtung getrennt werden kann. Zumindest aber mindert der Gebrauch auch hier die Rückstellkraft der als Verriegelungskrallen dienenden Druckfinger bei häufiger Bedienung des Anschlußstückes, also beim Öffnen und Befestigen des Profilrohres. Dessen einwandfreies Lösen kann nicht gewährleistet werden

Die erkannten Nachteile bei Anschlußstücken der eingangs beschriebenen Art zu beseitigen ist Ziel vorliegender Erfindung.

Zur Lösung dieser Aufgabe führt die Lehre nach dem unabhängigen Patentanspruch 1. Die Unteransprüche geben günstige Weiterbildungen an.

Nach der Lehre des Patentanspruchs 1 liegen die radial nach außen gerichteten Außenflächen der Druckfinger innerhalb eines von der Umfangsfläche des Klemmringes bestimmten zylindrischen Bereiches, so dass die Schenkel oder Druckfinger des eine Schiebemuffe bildenden Klemmringes in allen Betriebszuständen innerhalb der Verbindungsbüchse unter Vorspannung verbleiben, was die erwähnten Ermüdungserscheinungen hintanhält. Zudem wird während der von Hand durch den Handwerker durchzuführenden axialen Verschiebung gegen die Einschubrichtung der Druckfinger von einer erfindungsgemäß in jedem der Durchbrüche an der Büchseninnenseite vorhandenen Schwelle mit geneigter Pultfläche angepreßt, bis er mit seiner Nase in das Wellrohr einzugreifen vermag.

Vorteilhafterweise ragen die Schwellen jeweils von der der Einschubrichtung entgegenstehenden Querkante des Durchbruches an der Büchseninnenseite auf, wobei von der Oberkante der Schwelle eine nach außen geneigte Pultfläche ausgeht, welcher die innere Pultfläche des Druckfingers gleitbar anliegt. In Gegenrichtung wird die Nase des Druckfingers -- welcher seinerseits mit einer schrägen Pultfläche versehen ist -- angehoben, was zur Freisetzung des Wellschlauches führt.

Mittels einer Gabel oder eines Gabelschlüssels kann die Schiebemuffe ebenfalls in Gegenrichtung gedrückt werden; auch dies setzt das Profilrohr frei.

Als günstig hat es sich dazu erwiesen, dem Klemmring bzw. der inneren Schiebemuffe eine sich wenigstens über einen Teil der Umfangsfläche erstreckenden Ringnut oder Ringkerbe zuzuordnen, welcher dann vorteilhafterweise eine Eingriffsöffnung zukommt, von denen erfindungsgemäß wenigstens zwei den Durchbrüchen der Verbindungsbüchse -- nahe deren freien Kante -- zugeordnet sind. Dank dieser Eingriffsöffnungen kann beispielsweise mittels eines Schraubenzieherendes durch die Verbindungsbüchse hindurch die Schiebemuffe ergriffen und axial verschoben werden. Mit diesen Maßgaben ist also im montierten Zustand ohne Belastung zum einen die an sich bekannte schnelle Handentriegelung möglich. Zum anderen aber wird eine Sicherheitsentriegelung angeboten mit axialem Gegendruck, die nur unter bewußtem Einsatz eines Hilfswerkzeuges gelöst zu werden vermag. Bei einer axialen Gegendruck-Schiebebewegung -- etwa bei Demontage -- werden die Druckfinger über schräge Pultflächen so positioniert, dass das Wellrohr entriegelt werden kann.

Nach weiteren Merkmalen der Erfindung ist das freie Ende des Druckfingers von einer Basislinie bzw. einem Grat gebildet, um das Zusammenwirken der Pultflächen zu gewährleisten, und diese Basislinie wird im Radialquerschnitt von zwei zueinander geneigten Pultflächen des Druckfingers bestimmt, deren eine in die Nase übergeht und deren andere an die Außenfläche des Druckfingers anschließt.

Vorteilhafterweise ist jene Basislinie im Radialquerschnitt von einer in Ruhestellung des Druckfingers von der Nase weg geneigten inneren Pultfläche und einem teilkreisförmigen Krümmungsbereich bestimmt, der in eine geneigte Rückenfläche des Druckfingers übergeht. Letztere gleitet beim Schubvorgang an der Verbindungsbüchse entlang; Außenfläche oder Rückenfläche des Druckfingers dient beim Einschub des Klemmringes als Gleitfläche, deren Partner bevorzugt ein Vorsprung der Verbindungsbüchse ist.

Insgesamt ergibt sich eine die vom Erfinder gesehene Aufgabe in bestechend einfacher Weise erfüllende neuartige Vorrichtung der eingangs erwähnten Art. Von Vorteil ist auch, daß ein ungewolltes Betätigen ausgeschlossen bleibt; das Lösen des Profilrohres ist mittels eines Hilfswerkzeuges zu bewerkstelligen.

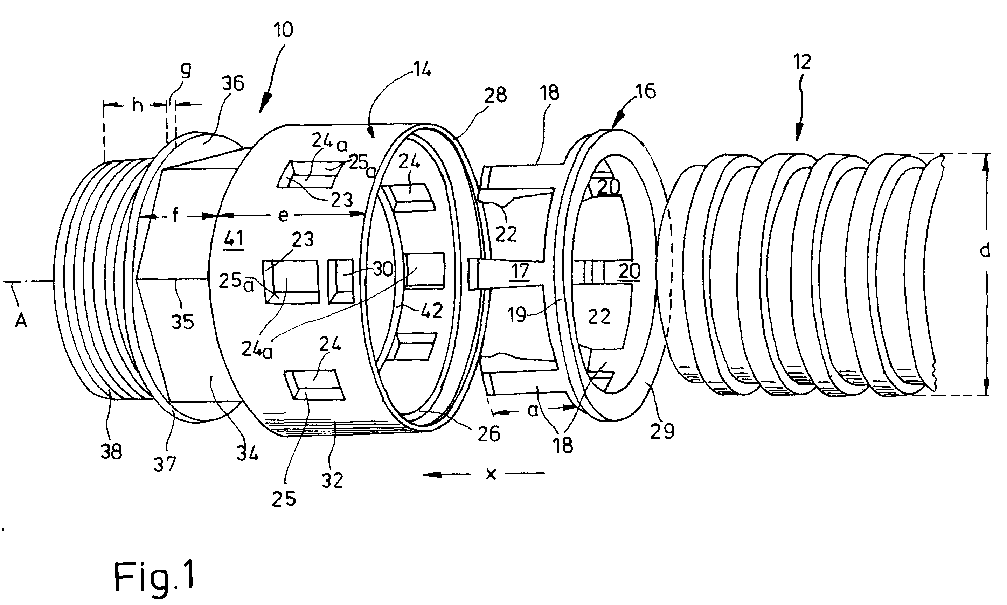

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf ein auseinandergezogenes Anschlußstück aus einer Verbindungsbüchse mit zugeordnetem Klemmring für einen Wellschlauch;
- Fig. 2:: den Längsschnitt durch die Verbindungsbüchse des Anschlußstückes, geschnitten in einer durch die System-Längsachse gelegten Ebene;
- Fig. 3:: einen Querschnitt durch Fig. 2 nach deren Linie III-III;
- Fig. 4:: die Draufsicht auf den Klemmring gegen Einschubrichtung in zwei Ausführungen;
- Fig. 5:: die Seitenansicht des Klemmringes über einer geschnittenen dargestellten Ausgestaltung der Verbindungsbüchse;
- Fig. 6:: einen gegenüber den Fig. 2 bis 4 vergrößerten Teilquerschnitt durch das zweiteilige Anschlußstück mit eingesetztem Wellschlauch;
- Fig. 7, 8:: zwei skizzenhafte Teilquerschnitte durch das Ausführungsbeispiel der Fig. 6 in unterschiedlichem Betriebszustand des Anschlußstückes bzw. in Entriegelungsstellung.

Ein Anschlußstück 10 für einen bei 12 angedeuteten Wellschlauch kreisförmigen Querschnittes eines Außendurchmessers d zwischen 8 bis 50 mm -- im ausgewählten Ausführungsbeispiel etwa 16,0 mm -- besteht aus einer zylindrischen Verbindungsbüchse 14 und einem in diese axial einsetzbaren Klemmring 16, von dem in Einschubrichtung x, also etwa parallel zur System-Längsachse A, -- im vorliegenden Beispiel sechs -- einends angeformte Druckfinger 18 der freien Länge a von 6 mm abragen. Verbindungsbüchse 14 und Klemmring 16 sind bevorzugt aus einem Polyamidwerkstoff (PA) hergestellt.

Der eine innere Schiebemuffe bildende Klemmring 16 weist einen äußeren Radialkragen 19 auf, und aus der Innenfläche 20 jedes der -- sich längsschnittlich zum freien Ende hin keilartig erweiternden -- Druckfinger 18 ist eine stegartige Quernase 22 herausgeformt.

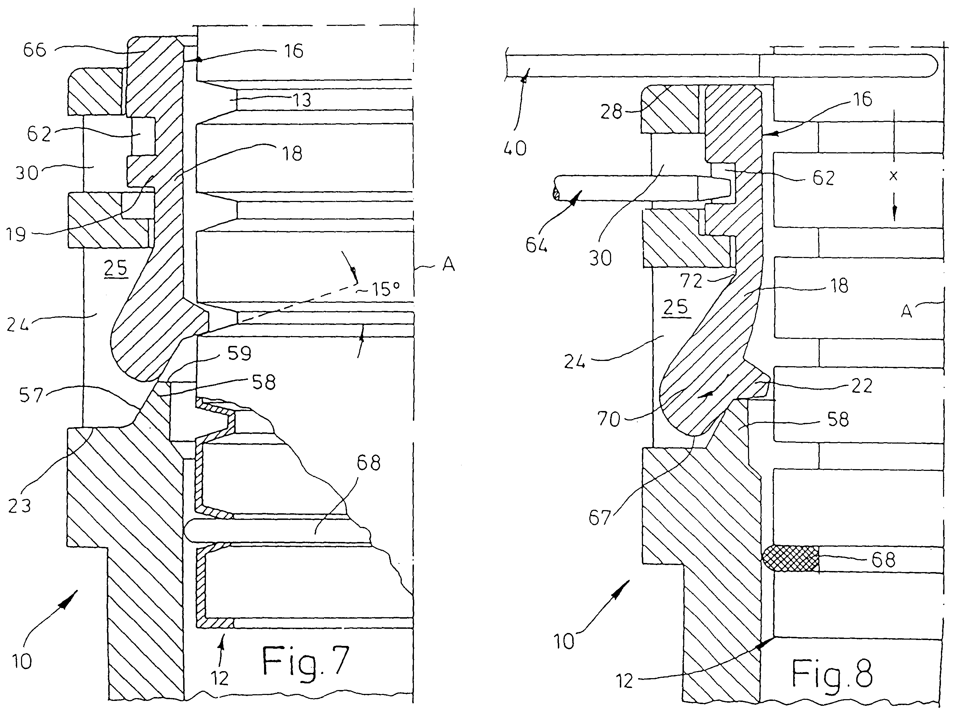

Der Klemmring 16, dessen äußerer Durchmesser b hier 21,5 mm mißt, kann in die Verbindungsbüchse 14 des Außendurchmessers c von 26 mm so eingeschoben werden, daß jene Druckfinger 18 innenseitig jeweils vor einem rechteckigen Durchbruch 24 der Verschlußbüchse 14 stehen und der Radialkragen 19 an eine innere Schulterfläche 26 der Verbindungsbüchse 14 anschlägt; im Beispiel der Fig. 8 fluchtet deren Kante 28 in dieser Stellung mit der Ringoberfläche 29 des Klemmringes 16.

Die einstückige Verbindungsbüchse 14 selbst bietet vier Bereiche an, nämlich eine an jene Kante 28 anschließende, eine -- hier sechs fensterartige Durchbrüche 24 sowie über zwei gegenüberliegenden Durchbrüchen 24 ein Paar von Eingriffsöffnungen 30 enthaltende -- Ringbüchse 32 der Länge e von hier etwa 15 mm, einen Greifring 34 sechseckigen Querschnittes der Länge f von 8 mm, einen diesen anderseits begrenzenden Querteller 36 einer Dicke g von 2 mm und einen Gewindestutzen 38 der beispielsweisen Länge h von 10 mm.

Die Ringkante 37 des Quertellers 36 bildet etwa den geometrischen Ort für achsparallele Ecklinien 35 des Greifringes 34, an den beispielsweise ein in Fig. 8 mit 40 bezeichneter Schlüssel angelegt werden kann.

Die Außenfläche 41 der Ringbüchse 32 ist eben, ihre Innenfläche ist in Einschubrichtung x mehrfach gestuft - zum einen an der erwähnten Schulterfläche 26 sowie zum anderen an einer zur Längsachse A in einem Neigungswinkel t von hier 45° querschnittlich schräg gelegten Ringfläche 42, die gewindewärts nahe den Durchbrüchen 24 verläuft; eine weitere radial gerichtete Schulterfläche 44 bildet an der gewindefernen Oberfläche des Quertellers 36 den inneren Übergang vom Gewindestutzen 38 zum Greifring 34. Dessen Innenfläche 46 ist zur Verbesserung der Dichtigkeit des Ensembles in Einschubrichtung x in einem Winkel w von 2° nach innen geneigt. Der anschließende Innendurchmesser i des Gewindestutzens 38 mißt 13 mm, sein Außendurchmesser i₁ etwa 18 mm.

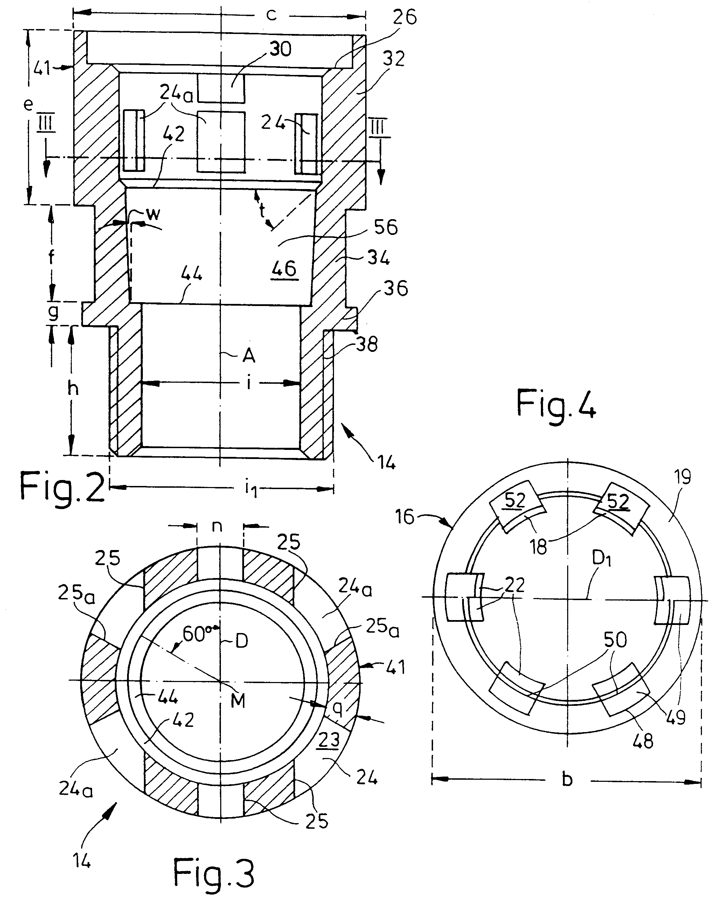

Insbesondere Fig. 3 verdeutlicht, daß zwei der Durchbrüche 24 einander diametral gegenüberliegen und parallel zu einer Durchmessergeraden D in Abstand n von 4,5 mm Seitenflächen 25 aufweisen. Parallel dazu stehen die benachbarten Seitenflächen 25 anderer Durchbrüche 24_{a,} an denen jeweils andere Seitenflächen 25ₐ nahezu radial zum Querschnittsmittelpunkt M gerichtet sind. Das Maß der Wanddicke q der Ringbüchse 32 entspricht im übrigen etwa jenem Abstand n und damit der engsten Durchbruchsbreite.

Fig. 4 zeigt zwei Ausführungen der Druckfinger 18 des Klemmringes 16, nämlich unterhalb einer Durchmessergeraden D₁ eine Ausgestaltung mit Quernase 22, einer Außenrippenfläche 48 mit anschließender Pultfläche 49 und einer zur Ring-Oberfläche 29 parallelen Endfläche 50; oberhalb jener Durchmessergeraden D₁ finden sich Druckfinger 18 keilförmigen Längsschnittes mit jener Quernase 22 sowie einer etwa quadratischen Basisfläche 52, die ebenfalls zur Oberfläche 29 etwa parallel steht.

Wenn der Wellschlauch 12 in Einschubrichtung x in das Anschlußstück 10 eingeführt wird, greifen die Quernasen 22 der Druckfinger 18 in eine der Umfangsnuten 13 des Wellschlauches 12 rundum ein, wobei die freien Enden der Druckfinger 18 im Bereich der Durchbrüche 24, 24ₐ kurzzeitig nach außen auszuweichen vermögen; der Werkstoff des Klemmringes 16 ist federelastisch.

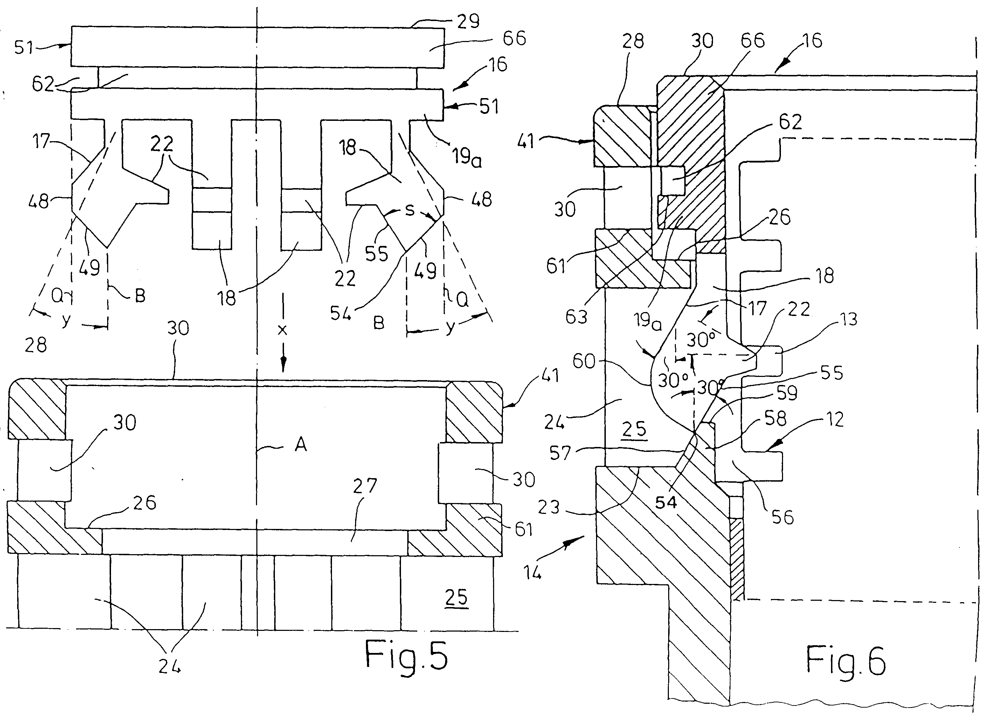

Die Druckfinger 18 der Fig. 5 enden nach unten hin in einer Basislinie 54 zwischen der äußeren Pultfläche 49 und einer inneren Pultfläche 55, die gemeinsam einen Querschnittswinkel s von fast 90° bilden. Die an die äußere Pultfläche 49 anschließende Außenrippenfläche 48 fluchtet hier mit der Umfangsfläche 51 des Radialkragens 19ₐ -- Hilfsgerade Q --, kann also ohne radialen Druck in die Verbindungsbüchse 14 eingeschoben werden. Die Pultfläche 49, die Außenrippenfläche 48 und die Rückenfläche 17 des Druckfingers 18 gleiten über einen die Schulterfläche 26 anbietenden Vorsprung 27 der Verbindungsbüchse 14 und nach diesem in ihre vorherige -- spannungsfreie -- Ruhelage zurück.

Diese ist in Fig. 5 durch Parallelen zur Systemlängsachse A angedeutet, an die der von der Gelenkstelle des Druckfingers 18 ausgehende Schwenkwinkel y anschließt.

Dank eines Neigungswinkels z von mehr als 5° -- bevorzugt etwa 8° -- der Rückenfläche 17 des Druckfingers 18 zur Längsachse A wird letzterer bei einer Bewegung gegen Einschubrichtung x zunehmend in die entsprechende Umfangsnut 13 des Wellschlauches 12 eingedrückt.

Beim Ausführungsbeispiel der Fig. 6 ist oberhalb des Durchbruches 24, dessen untere Querkante 23 zum Innenraum 56 der Verbindungsbüchse 14 hin mit einer aufragenden Schwelle 58 versehen ist, die Eingrifföffnung 30 erkennbar, dank deren ein Zugriff zu einer Ringkerbe oder Ringnut 62 des Klemmringes 16 möglich wird. Dank dieser Ringnut 62 kann mittels eines radial angesetzten Schraubenziehers od. dgl. Werkzeuges 64 (Fig. 8) eine axiale Verschiebung des Klemmringes 16 problemlos durchgeführt werden. Diese Ringnut 62 befindet sich in einem angeformten Verlängerungsring 66 des Radialkragens 19ₐ.

In Endstellung des Systems sitzt der Radialkragen 19ₐ auf der Schulterfläche 26 auf, und die untere Querkante 61 der Eingrifföffnung 30 fluchtet mit der benachbarten Wandung 63 der Ringnut 62. Dann auch lagert die Basislinie 54 als spitzer Grat des Druckfingers 18 am Schnittpunkt der Querkante 23 mit einer geneigten Pultfläche 57 der Schwelle 58. Die in eine Umfangsnut 13 des Wellschlauches 12 eingreifende Quernase 22 sitzt dann der Oberkante 59 der Schwelle 58 auf.

In dem in Fig. 6 gezeigten Betriebszustand des Wellschlauches 12 ist die an einen teilkreisförmigen Krümmungsbereich 60 anschließende, geneigte Rückenfläche 17 des Druckfingers 18 an die obere Kante des Durchbruches 24 herangeführt; die Ringnut 62 des Klemmringes 16 steht im oberen Bereich der Eingrifföffnung 30.

Fig. 7 zeigt eine Konfiguration entsprechend der zu Fig. 6 beschriebenen mit Wellschlauch 12 in Betriebszustand. Dieser ist durch einen in eine der Umfangsnuten 13 gelegten O-Ring 68 innerhalb des Anschlußstückes 10 zusätzlich abgedichtet. Fig. 8 soll die Entriegelungsweise zum Lösen des Wellrohres 12 mit Schraubenzieher 64 als Entriegelungshilfe deutlich werden lassen; der die Eingriffsöffnung 30 durchgreifende Schraubenzieher 64 wird radial zur Einschubrichtung x gehalten und parallel zu letzterer verschoben. Dabei gleitet -- wie bereits beschrieben -- das freie Ende 67 des Druckfingers 18 an der Pultfläche 57 abwärts und wird radial nach außen gelenkt, bis der querschnittlich dreikantartige untere Schenkelteil 70 des Druckfingers 18 nahezu gänzlich in den Durchbruch 24 eingeschoben ist. Eine zwischen dem Klemmring 16 und jenem Schenkelteil 70 vorhandene Gelenk- oder Sollknickstelle ist in Fig. 8 der besseren Übersicht halber mit 77 bezeichnet.

## Patentansprüche

1. Anschlußstück für Profilstutzen, Wellschläuche, od.dgl. Profilrohre mit parallelen Außennuten, welches eine Verbindungsbüchse mit mehreren fensterartigen Durchbrüchen in der etwa zylindrischen Wandung sowie einen in der Verbindungsbüchse axial verschieblichen, mit etwa parallel zur Büchsenachse einstückig angeformten, um einen Gelenkbereich schwenkbaren Druckfingern ausgestatteten Klemmring aufweist, wobei die Druckfinger in Betriebs- oder Befestigungsstellung einerseits jeweils an einem der Durchbrüche angeordnet sind sowie anderseits mit einer Nase in eine der Außennuten des Profilrohres eingreifen,
wobei die radial nach außen gerichteten Außenflächen (48) der Druckfinger (18) innerhalb eines von der Umfangsfläche (51) des Klemmringes (16) bestimmten zylindrischen Bereiches liegen, und wobei von der der Einschubrichtung (x) entgegenstehenden Querkante (23) der Durchbrüche (24) an der Büchseninnenseite eine Schwelle (58) mit von deren Oberkante (59) nach außen geneigter Pultfläche (57) abragt, welcher eine innere Pultfläche (55) des Druckfingers (18) gleitbar anliegt.

2. Anschlußstück nach Anspruch 1, dadurch gekennzeichnet, daß gegen die Einschubrichtung (x) des Profilrohres (12) dem Druckfinger (18) eine im Klemmring (16) vorgesehene, sich wenigstens über einen Teil der Umfangsfläche (51) erstreckende Ringkerbe oder Ringnut (62) vorgeordnet ist.

3. Anschlußstück nach Anspruch 1 oder 2, dadurch gekennzeichnet, daß wenigstens zwei Durchbrüchen (24) zur freien Kante (28) der Verbindungsbüchse (14) hin jeweils eine deren Wand durchsetzende fensterartige Eingriffsöffnung (30) zugeordnet ist.

4. Anschlußstück nach einem der Ansprüche 1 bis 3, dadurch gekennzeichnet, daß das freie Ende des Druckfingers (18) von einer Basislinie (54) bzw. einem Grat gebildet ist.

5. Anschlußstück nach Anspruch 4, dadurch gekennzeichnet, daß die Basislinie (54) des Druckfingers (18) im Radialquerschnitt von zwei zueinander geneigten Pultflächen (49, 55) bestimmt ist, deren eine an die Außenfläche (48) des Druckfingers anschließt und deren andere als die innere Pultfläche in die Nase (22) übergeht.

6. Anschlußstück nach einem der Ansprüche 1 bis 4, dadurch gekennzeichnet, daß die Basislinie (54) des Druckfingers (18) im Radialquerschnitt von der in Ruhestellung des Druckfingers von der Nase (22) weg geneigten inneren Pultfläche (55) und einem teilkreisförmigen Krümmungsbereich (60) bestimmt ist, der in eine geneigte Rückenfläche (17) des Druckfingers (18) übergeht.

7. Anschlußstück nach wenigstens einem der Ansprüche 1 bis 6, dadurch gekennzeichnet, daß die Außenfläche (48) oder die Rückenfläche (17) des Druckfingers (18) beim Einschub des Klemmringes (16) als Gleitfläche dient.

8. Anschlußstück nach Anspruch 7, dadurch gekennzeichnet, daß der Partner der Gleitfläche ein Vorsprung (27) der Verbindungsbüchse (14) ist.

9. Anschlußstück nach wenigstens einem der Ansprüche 1 bis 8, gekennzeichnet durch eine paarige Anordnung der Eingriffsöffnungen (30).

10. Anschlußstück nach wenigstens einem der Ansprüche 1 bis 9, dadurch gekennzeichnet, daß dem Anschlußstück (10) innenseitig zumindest eine Dichtung (68) anliegt, die in eine Umfangsnut (13) des Profilrohres (12) umlaufend eingelegt ist.

## Claims

1. Connecting piece for profile muffs, corrugated hoses or similar profile tubes with parallel outer grooves, comprising a connecting sleeve with a plurality of window-like openings in its substantially cylindrical wall and a clamping ring axially displaceable in the connecting sleeve and provided with clamping fingers moulded in one piece therewith substantially parallel to the sleeve axis and pivotable about a hinge region, in the operating or fastening region, the clamping fingers, on the one hand, each being arranged at one of the openings and, on the other hand, engaging by means of a lug in one of the outer grooves in the profile tube, the radially outwardly directed outer surfaces (48) of the clamping fingers (18) being situated within a cylindrical region defined by the circumferential surface (51) of the clamping ring (16) and a barrier element (58) projecting from the transverse edge (23) of the openings (24) on the inner face of the sleeve against the direction of insertion (x) by means of its surface (57) which is inclined towards the outside departing from its upper edge (59) and bears slidably against an inner inclined surface (55) of the clamping finger (18).

2. Connecting piece according to claim 1, characterised in that an annular notch or annular groove (62) provided in the clamping ring (16) and extending at least over part of the circumferential surface (51) is arranged upstream of the clamping finger (18) against the direction of insertion (x) of the profile tube (12).

3. Connecting piece according to claim 1 or claim 2, characterised in that respective window-like engagement apertures (30) traversing the wall of the connecting sleeve (14) are associated with at least two openings (24) towards the free edge (28) thereof.

4. Connecting piece according to one of claims 1 to 3, characterised in that the free end of the clamping finger (18) is formed by a base line (54) or a flash.

5. Connecting piece according to claim 4, characterised in that the base line (54) of the clamping finger (18) is defined in radial cross section by two surfaces (49, 55) inclined relative to one another, one of which adjoins the outer surface (48) of the clamping finger and the other of which passes over into the lug (22) as the inner inclined surface.

6. Connecting piece according to one of claims 1 to 4, characterised in that the base line (54) of the clamping finger (18) is defined in radial cross section by the inner surface (55) inclined away from the lug (22) in the rest position of the clamping finger and an arcuate curved region (60) which passes over into an inclined rear surface (17) of the clamping finger (18).

7. Connecting piece according to at least one of claims 1 to 6, characterised in that the outer surface (48) or the rear surface (17) of the clamping finger (18) serves as a sliding surface when the clamping ring (16) is inserted.

8. Connecting piece according to claim 7, characterised in that the partner of the sliding surface is a projection (27) on the connecting sleeve (14).

9. Connecting piece according to at least one of claims 1 to 8, characterised in that the engagement apertures (30) are arranged in pairs.

10. Connecting piece according to at least one of claims 1 to 9, characterised in that at least one seal (68) inserted circumferentially into a circumferential groove (13) in the profile tube (12) bears against the inner face of the connecting piece (10).

## Revendications

1. Raccord pour tubulures profilées, tubes flexibles ondulés ou tubes profilés analogues à rainures extérieures parallèles, présentant un manchon de raccordement, avec plusieurs ouvertures en forme de fenêtres dans la paroi sensiblement cylindrique, ainsi qu'une bague de serrage, coulissant axialement dans le manchon de raccordement, et qui est équipée de doigts de pressage, susceptibles de pivoter autour d'une zone d'articulation, sensiblement parallèles à l'axe du manchon, et réalisés monobloc avec la bague, raccord dans lequel les doigts de pressage en position de fonctionnement ou en position de fixation, d'une part sont chacun disposés dans l'une des ouvertures, et d'autre part s'engagent par un bec dans l'une des rainures extérieures du tube profilé,
raccord dans lequel les surfaces extérieures (48) des doigts de pressage, dirigées radialement vers l'extérieur, sont placées à l'intérieur d'une zone cylindrique déterminée par la surface périphérique (51) de la bague de serrage (16), et raccord dans lequel depuis le bord transversal (23) des ouvertures (24), situé à l'opposé de la direction d'emmanchement (x), sur la face intérieure du manchon, s'élève un seuil (58) avec une surface d'appui (57), inclinée vers l'extérieur à partir de son bord supérieur (59), et sur laquelle s'appuie en étant susceptible de glisser une surface d'appui intérieure (55) du doigt de pressage (18).

2. Raccord selon la revendication 1, caractérisé en ce que, du côté de la direction d'emmanchement (x) du tube profilé (12), est disposé devant le doigt de pressage (18) une rainure ou encoche annulaire (62) prévue dans la bague de serrage (16) et s'étendant sur au moins une partie de la surface périphérique (51).

3. Raccord selon la revendication 1 ou 2, caractérisé en ce qu'à au moins deux ouvertures (24) vers le bord libre (28) du manchon de raccordement (14), est chaque fois associée une ouverture d'actionnement (30), en forme de fenêtre et traversant la paroi du manchon.

4. Raccord selon l'une des revendications 1 à 3, caractérisé en ce que l'extrémité libre du doigt de pressage (18) est formée par une ligne de base (54) ou une arête.

5. Raccord selon la revendication 4, caractérisé en ce que la ligne de base (54) du doigt de pressage (18), est définie, en section transversale radiale, par deux surfaces d'appui (49, 55) inclinées, l'une par rapport à l'autre, dont l'une se raccorde à la surface extérieure (48) du doigt de pressage, et dont l'autre constitue la surface d'appui intérieure, et se prolonge par le bec (22).

6. Raccord selon l'une des revendications 1 à 4, caractérisé en ce que la ligne de base (54) du doigt de pressage (18), en section transversale radiale, est définie par la surface d'appui intérieure inclinée (55), partant du bec (22) en position de repos du doigt de pressage et par une zone incurvée (60) en forme d'arc de cercle, qui se prolonge par une surface arrière inclinée (17) du doigt de pressage (18).

7. Raccord selon au moins l'une des revendications 1 à 6, caractérisé en ce que la surface extérieure (48) ou la surface arrière (17) du doigt de pressage (18), sert de surface de glissement lors de l'emmanchement de la bague de serrage (16).

8. Raccord selon la revendication 7, caractérisé en ce que l'élément correspondant de la surface de glissement, est une partie saillante (27) du manchon de raccordement (14).

9. Raccord selon au moins l'une des revendications 1 à 8, caractérisé par un agencement par paires des ouvertures d'actionnement (30).

10. Raccord selon au moins l'une des revendications 1 à 9, caractérisé en ce que le raccord (10) comporte sur sa face intérieure au moins un joint d'étanchéité (68), qui est placé tout autour du tube profilé (12), dans une rainure périphérique (13).
